# EUROPÄISCHE PATENTSCHRIFT

(11) **EP 2 485 856 B1**
(45) Veröffentlichungstag und Bekanntmachung des Hinweises auf die Patenterteilung: **02.12.2015**
(21) Anmeldenummer: 10745208.8
(22) Anmeldetag: 16.08.2010
(51) Int. Cl.: B21F 23/00, B21F 27/10, B21F 27/20, B23K 11/00, E04C 5/04

(54) **VERFAHREN UND VORRICHTUNG ZUR HERSTELLUNG GESCHWEISSTER VERBINDUNGEN**
PROCESS AND DEVICE FOR MANUFACTURING WELDED CONCRETE REINFORCEMENT MATS
PROCÉDÉ ET INSTALLATION DE FABRICATION DE GRILLES DE RENFORCEMENT SOUDÉES POUR BÉTON ARMÉ

(30) Priorität: 06.10.2009 DE 102009048425
(43) Veröffentlichungstag der Anmeldung: 15.08.2012
(73) Patentinhaber: Häussler Innovation GmbH, Kempten 87435 (DE)
(72) Erfinder: HÄUSSLER, Franz, 86983 Lechbruck am See (DE); HUNDEGGER, Hans, 87459 Pfronten-Weissbach (DE)
(74) Vertreter: Hoppe, Lars
(86) Internationale Anmeldenummer: PCT/EP2010/061909
(87) Internationale Veröffentlichungsnummer: WO 2011/042240

(56) Entgegenhaltungen:
- EP-A2- 0 862 958
- WO-A1-2009/124520
- US-A- 1 620 362
- US-A- 1 821 696
- FURCHE J ET AL: "LATTICE GIRDER FLOOR SLABS IN CONFORMITY WITH THE NEW APPROVALS PART 1: FUNDAMENTALS AND SHEAR FORCE MODEL BASED ON THE NEW DIN 1045-1", BFT INTERNATIONAL, BAUVERLAG, GUTERSLOH, DE, Bd. 72, Nr. 8, 1. Januar 2006 (2006-01-01) , Seiten 4-06,08, XP001244921, ISSN: 0373-4331

## Beschreibung

Die vorliegende Erfindung betrifft ein Verfahren und eine Vorrichtung zur Herstellung von geschweißten Verbindungen zwischen Stahlkörpern zur Verwendung bei der Herstellung DIN-konformer, nicht überwiegend ruhend belasteter Stahlbetonbauteile.

Im Stahlbetonbau werden zur Verbesserung der statischen Eigenschaften von Betonbauteilen Stahlkörper oder -stäbe eingesetzt, die Zugkräfte aufnehmen und damit die Druckfestigkeit des Betons ergänzen, so dass die Tragfähigkeit der Stahlbetonbauteile verbessert wird. Die Stahlkörper und -stäbe werden entweder einzeln auf der Baustelle von Hand miteinander verflochten oder in Form geschweißter einachsiger oder zweiachsiger Stahlmatten oder in Segmenten in Spezialformen, eingesetzt, wobei als Material Bewehrungsstahl oder Rundstahl verwendet wird. Die kalt- oder warmverformt hergestellten Bewehrungsstahlstäbe sind in der Regel nicht verwunden, haben einen nahezu kreisförmigen Querschnitt und eine schräg gerippte Oberfläche und weisen gegebenenfalls Längsrippen auf. Die Schrägrippen sind dabei in der Regel im Querschnitt sichelförmig ausgebildet und weisen an der höchsten Stelle ein Maß von ca. 6,5% des Kernquerschnitts des Stabes auf. Bewehrungsstahlstäbe sind oft bis zu 15 m lang und weisen üblicherweise Durchmesser von bis zu 32 mm auf, so dass sie Gewichte von mehreren hundert Kilogramm erreichen können.

Für vorwiegend ruhende Belastungen sind geschweißte Verbindungen, wie sie in Bewehrungsstahlmatten oder den Spezialsegmenten auftreten seit langem bekannt und bewährt. Einen besonderen Vorteil haben geschweißte einachsige Bewehrungsstahlmatten, die auf der Baustelle besonders zeitsparend verlegbar sind. Entsprechende Herstellmaschinen sind ebenfalls seit längerem bekannt, beispielsweise aus der EP 0 862 958 oder der WO 2009/124520. Die in der EP 0 862 958 beschriebene Maschine zur Herstellung einachsiger Bewehrungsstahlstabmatten weist eine seitliche Bewehrungsstahlstabzufuhr zu einem Mattenbildner auf, wobei die bereits konfektionierten Bewehrungsstäbe entweder aus einem Vorhaltemagazin entnommen oder die noch zu konfektionierenden Bewehrungsstahlstäbe von einem als Richt-Schneideautomaten ausgebildeten Stabbildner von Vorratsrollen abgezogen, gerade gerichtet und abgelängt werden. Die in den Mattenbildner eingeförderten Bewehrungsstahlstäbe werden in Querrichtung zur Matte durch einen Querpositionierer positioniert und durch einen Schweißautomaten an flexible Tragbändern geschweißt. Bei zweiachsigen Bewehrungsstahlmatten erfolgt die Verschweißung der Stäbe mit anderen Stäben.

Die bekannten geschweißten Bewehrungsstahlstabmatten sind jedoch nicht für Stahlbetonbauteile und -werke mit nicht vorwiegend ruhenden Belastungen geeignet, wie sie im Tief- oder Ingenieurbau und im Hochbau auftreten. Zu nennen sind hier Betonbauteile bei Straßen- und Eisenbahnbrücken zu nennen, die wechselnden Belastungen aus dem fließenden Verkehr ausgesetzt sind. Ebenso betroffen sind Offshore-Anlagen, die durch Wellenschlag beansprucht werden und Anlagen, die dynamische Anregungen aus böigem Wind oder Wirbelablösung erfahren wie Türme, Masten, Hochhäuser. Gleichfalls zu nennen sind Betonbauteile in Industrieanlagen wie Kranbahnen, Staplerdecken, Maschinenfundamente. Bei all diesen Bauteilen kann Materialermüdung durch dauerhafte, hochzyklische Wechselbeanspruchung mit einer hohen Anzahl von Lastwechseln erfolgen. Diese Art der Beanspruchung ist ein Hauptschadensverursacher bei den genannten Bauteilen und -werke. Bei geschweißten Verbindungen ist das Materialermüdungsverhalten örtlich vor allem auf die Schweißnaht konzentriert, da beim Schweißvorgang durch Gefügeveränderung und starke Kerbwirkung die Ermüdungsfestigkeit des Stahls signifikant herabgesetzt wird. Aufgrund der Kerbwirkung der Schweißung erreichen bekannte geschweißte Bewehrungsstahlmatten oder Rundstäbe die durch die DIN 1045-1 vorgeschriebene Dauerschwingfestigkeit für die Anwendung bei nicht überwiegend ruhender Belastung nicht, sie liegen deutlich unterhalb der Wöhlerlinie für Stäbe. Unter Fachleuten bestand daher seit langem ein Vorurteil gegenüber der Eignung von Schweißverbindungen oder genauer der Eignung geschweißter Bewehrungsstahlmatten für den DIN-konformen Einsatz bei nicht überwiegend ruhend belasteten Bauteilen. Nur durch kostenträchtige Materialzugabe oder Verwendung höchstwertiger Stähle werden derartige geschweißte Matten überhaupt verwendbar. Daher wurden bislang vor allem einzelne Stäbe verwendet, die auf der Baustelle mühsam und zeitintensiv von Hand durch dünne Drähte miteinander verbunden werden mussten, so dass diese Herstellung einer dynamisch belastbaren Fläche aufgrund der kostenintensiven manuellen Verbindung entsprechend teuer ist. Wurden stattdessen geschweißte Bewehrungsstahlmatten verwendet, so stieg der Stahlverbrauch deutlich an, da eine ausreichend große Materialzugabe erforderlich war.

Das oben Gesagte trifft auch auf einachsige Bewehrungsstahlmatten zu, die neben den statisch nur in einer Richtung wirkenden Bewehrungsstahlstäben flexible, biegbare Tragbänder aufweisen, die die einzelnen Bewehrungsstahlstäbe miteinander verbinden und die die Aufrollbarkeit der fertigen einachsigen Bewehrungsstahlmatte ermöglichen. Da einachsige Bewehrungsstahlmatten Zugkräfte nur einer Richtung, ihrer Querrichtung, aufnehmen können, folgt, dass zwei um 90° zueinander gedrehte einachsige Bewehrungsstahlmatten pro Stahlbetonbauteil notwendig sind, damit dieses in jeder Richtung Zugkräfte und Biegemomente aufnehmen kann. Die einachsigen Bewehrungsstahlmatten weisen Breiten von bis zu 15 m auf und können Bewehrungsstahlstäbe mit unterschiedlichen Durchmessern und Längen enthalten. Sie werden aufgerollt an eine Baustelle angeliefert und dort mit wenig Personal und Aufwand einfach und schnell ausgerollt, so dass grundsätzlich die Verwendung von einachsigen Bewehrungsstahlstabmatten von großem Vorteil ist, auch bei der Herstellung von nicht überwiegend ruhend belasteten Stahlbetonbauteilen.

Aus der US-A-1 821 696 sind Bewehrungsstahlstabmatten bekannt, deren Stäbe aussdiließlich im Bereich der längorippen verschweisst sind.

Die vorliegende Erfindung stellt sich daher die Aufgabe, ein Schweißverfahren anzugeben, durch das die bislang erforderliche Materialzugabe bei Bewehrungsstahlmatten entfallen und auf das manuelle verflechten der einzelnen Stahlstäbe auf der Baustelle verzichtet werden kann. Die Erfindung stellt sich ebenfalls die Aufgabe, eine Maschine zur Herstellung geschweißter Bewehrungsstahlmatten anzugeben, deren Matten den nicht überwiegend ruhenden Belastungen ohne Materialzugabe gewachsen sind. Schließlich ist es Aufgabe der Erfindung, eine solche geschweißte Bewehrungsstahlmatte anzugeben.

Die Verfahrensaufgabe wird durch ein Verfahren gemäß dem Anspruch 1 gelöst. Mit äußerst großem Vorteil minimiert die Erfindung die Gefügeveränderung im verschweißten Stahl, indem sie mit sehr großem Vorteil einen Bereich des Stahlelements verwendet, der bereits von sich aus mit einer Art

Materialzugabe versehen ist. Dies sind im Falle der Bewehrungsstahlstäbe deren Querrippen, im Fall der Stahlstäbe deren Bereiche erhöhten Durchmessers wie beispielsweise angeformte Stege oder Plattenabschnitte und im Fall der sonstigen Stahlelemente deren entsprechende Bereiche. Diese Bereiche können in Form von Stegen, Bögen, Rippen o. ä. nachträglich eingebracht sein, oder bei konstruktiv aufwendiger gestalteten Bewehrungen aus Stahlelementen bereits vorhanden sein. Zu diesen konstruktiv aufwendigeren Stahlelementen zählen alle dreidimensionalen Armierungsgebilde, die beispielsweise einen I- oder T- oder Doppel-T-Träger nachempfinden. Es kommt der Erfindung in erster Linie also nicht auf die Verwendung von Rundstählen oder Bewehrungstahlstäben an, sondern auf die Lehre, den jeweiligen Schweißpunkt in einem Bereich größerer Materialstärke einzubringen, so dass das jeweilige Kernmaterial so wenig wie möglich in seinem Gefüge verändert wird. Bei Bewehrungstahlstäben und damit bei ein- und zweiachsigen geschweißten Matten aus Bewehrungsstahlstäben bieten sich deren Rippen an. Bei einachsigen Matten erfolgt die Schweißung zwischen Rippe und Tragband, das notwendigerweise keinen Bereich größerer Materialstärke hat. Dies ist jedoch vernachlässigbar, da das Tragband keine Funktion innerhalb der Statik des späteren Betonbauteils hat und nach Einbau brechen darf. Demnach können mit dem erfindungsgemäßen Verfahren neben anderen Armierungsverbindungen sowohl einachsige als auch zweiachsige Bewehrungsstahlstabmatten hergestellt werden. Der Erfindung kommt es nicht darauf an, in welcher Reichenfolge die Schweißvorrichtung und das Schweißgut zueinander positioniert werden, also ob eine bewegliche Schweißvorrichtung über vorher positionierte Elemente verfahren wird, oder ob die Elemente einzeln oder gemeinsam in eine stationäre Schweißvorrichtung verfahren werden, oder eine Mischform davon angewandt wird, solange die geschweißte Verbindung im Bereich der erhöhten Materialstärken stattfindet. Das Verfahren wird erfindungsgemäß solange wiederholt, bis die Zahl der gewünschten Schweißverbindungen erreicht ist. Dies kann bedeuten, dass die gesamten Verbindungen oder nur ein Teil davon verschweißt sind, was insbesondere bei Matten gewünscht sein kann. Durch diese überraschende Lösung wird mit großem Vorteil erreicht, dass eine so hergestellte Bewehrungsstahlmatte selbst bei 175 N/mm² und 10⁶ Lastspielen oberhalb der Wöhlerlinie für Stäbe gemäß DIN 1045-1 liegt. Obwohl der erfindungsgemäße Bereich der Schweißung große Flächen des Bewehrungsstahlstabes von einer Schweißung ausnimmt und somit eine exakte und genau kontrollierte Positionierung des Bewehrungsstahlstabes wünschenswert macht, überwiegen die Vorteile die Nachteile bei weitem, insbesondere im Bereich der Materialkosten. Damit wird ein lang bestehendes Vorurteil der Fachwelt im Hinblick auf die Tauglichkeit von geschweißten Bewehrungsstahlmatten für Bauteile mit nicht überwiegend ruhender Belastung überwunden. So hergestellte Bewehrungsstahlmatten verhalten sich völlig ohne Materialzugabe bereits wie Stäbe gemäß der DIN-1045-1 und sind somit überraschend gut einsetzbar.

Die Schweißverbindung kann erfindungsgemäß eine Heftschweißung sein.

In Ausgestaltung des Verfahrens ist vorgesehen, dass in oder nach Schritt a) eine Lagekontrolle und ggf. Lagekorrektur des oder der zu verschweißenden Elemente erfolgt, wobei die Lagekontrolle mechanische oder optische Sensoren verwendet, insbesondere Meßfühler, und die Lagekorrektur mittels Drehen des Elements durchgeführt wird. Eine solche Lagekontrolle ist erforderlich, um die Schweißung am richtigen Ort zu gewährleisten. Unter den rauen Umgebungsbedingungen, hervorgerufen durch Metallstaub und -abrieb, Schmutz, bewegter Massen und dergleichen ist zwar durchaus eine optische Messung verwendbar, wie beispielsweise eine Lichtschranke, jedoch sind erfindungsgemäß mechanische Messverfahren bevorzugt, insbesondere Messfühler oder Taster, die sich den unrunden Querschnitt der Elemente zunutze machen. Entscheidend ist, dass diese bekannten Verfahren bei den rauen Bedingungen der Mattenherstellung ausreichend zuverlässig und lange arbeiten. Eine Lagekorrektur ist vor allem hinsichtlich der Lage der Rippen zur Schweißvorrichtung und/oder den anderen Rippen erforderlich und erfolgt erfindungsgemäß durch Rotation des Stabes.

Die Anmelderin hat festgestellt, dass es im Fall von Bewehrungsstahlstäben besonders vorteilhaft ist, dass Schritt b) im Bereich von mehr als 30% der maximalen Höhe der jeweiligen Rippe, vorzugsweise von mehr als 60%, ganz besonders im Bereich von mehr als 80% durchgeführt wird. Selbst bei derart geringen Rippenhöhen reicht der Schutz des Kernmaterials des Stabes durch das Rippenmaterial aus, die dortige Gefügeveränderung soweit zu minimieren, dass ausreichend Schwingungsfestigkeit gegeben ist, so dass Materialbrüche möglichst nicht im Bereich der Schweißnaht auftreten sondern im Bereich der freien Stablänge. Hierdurch wird mit Vorteil die zur Schweißung nutzbare Fläche des Bewehrungsstahlstabes wiederum etwas vergrößert.

In Ausgestaltung des erfindungsgemäßen Verfahrens ist vorgesehen, dass ein Schritt d) der Lagekontrolle der Schweißnähte erfolgt, was eine Qualitätssicherung darstellt. Es wird so sichergestellt, dass nur solche Matten hergestellt werden, die den Anforderungen genügen und insbesondere eine ausreichende Anzahl von korrekten Schweißnähten aufweisen.

Zur Qualität des erfindungsgemäßen Verfahrens trägt auch bei, dass Schritt b) unter Schweißsteuerung erfolgt, insbesondere unter Steuerung des Energieeintrages. Hierdurch ist es zum einen möglich, auch die weiter außen liegenden Randbereiche der sichelförmigen Rippen für eine Schweißung zu nutzen, als auch gezielt Bewehrungsstahlstäbe unterschiedlichen Durchmessers einfacher miteinander zu verschweißen. Diese letzte Verbindungsart ist jedoch auch ohne Schweißsteuerung möglich.

Das erfindungsgemäße Verfahren und die erfindungsgemäße Maschine sind mit Vorteil so ausgestaltet, dass die Schweißparametersteuerung die Schweißvorrichtung so steuernd ist, dass vorgewählte Schweißpunkte zur Erzeugung ungestörter Bereiche der Bewehrungsstahlstabmatte ausgelassen werden. Dies erhöht die Qualität der Bewehrungsstahlstabmatte, da sie, wo statisch besonders erforderlich, ungestörte Bereiche aufweist.

Die Vorrichtungsaufgabe wird durch eine Maschine gemäß dem Anspruch 7 gelöst.

Vorteilhafte Ausgestaltungen der Maschine sind den Unteransprüchen zu entnehmen.

Im übrigen kann die erfindungsgemäße Maschine so ausgebildet sein, wie es in der EP 0 862 958 und/oder der PCT/DE2009/000298 beschrieben ist.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine Aufsicht auf eine Ausführungsform der Maschine zur Herstellung einer einachsigen Bewehrungsstahlstabmatte,
- Fig. 2:: eine Seitenansicht einer Ausführungsform,
- Fig. 3:: eine Seitenansicht einer weiteren Ausführungsform der Maschine,
- Fig. 4:: eine Skizze einer Lagekontroll- und -korrektureinheit gemäß der Erfindung und
- Fig. 5a, b:: eine Skizze eines Bewehrungsstahlstabes

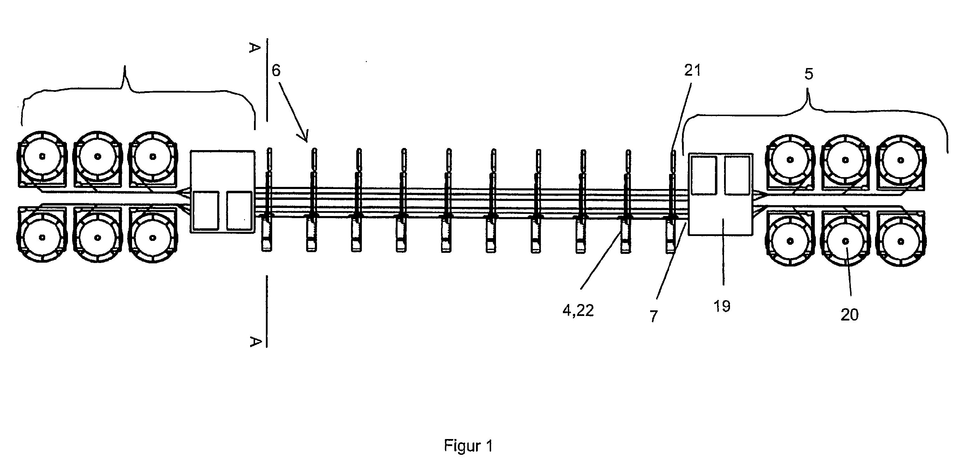

Figur 1 zeigt eine Aufsicht auf eine erfindungsgemäße Maschine zur Herstellung einachsiger Bewehrungsstahlstabmatten. Diese Maschine weist eine Gesamtlänge von etwa 30 Metern auf, von denen 15 Meter auf den Mattenbildner 6 entfallen. Links und rechts vom Mattenbildner 6 sind Vorhaltemagazine 5 für Bewehrungsstahlstäbe 2 dargestellt, die in diesem Fall aus Stabbildnern 19 bestehen, die auf Coils 20 gewickelte Drähte unterschiedlichen Durchmessers abziehen, gerade richten und ablängen. Hierbei ist erfindungsgemäß vorgesehen, dass die Coils 20 Draht mit einem Durchmesser von bis zu 20 mm tragen. Aufgrund der mechanischen Verformung der Drähte bei der Stabbildung kann es zu einer Verringerung ihrer Eignung für das erfindungsgemäße Verfahren kommen. In diesem Fall würden sich rechts und/oder links des Mattenbildners 6 ein Vorhaltemagazin 5 in Form eines Stabmagazins befinden, in dem vorkonfektionierte Bewehrungsstahlstäbe 2 vorrätig gehalten und manuell oder maschinell in den Einförderbereich, insbesondere zum Bewehrungsstahlstabeinlauf 7 eingebracht werden. In diesem Ausführungsbeispiel besitzen die Coils 20 rechts und links des Mattenbildners 6 Bewehrungsstahldraht gleichen oder ungleichen Durchmessers. Gut zu erkennen ist, dass ein auch als Richt-Schneideautomat bezeichneter Stabbildner 19 den Draht eines Coils 20 stets an derselben Stelle in den Mattenbildner 6 einspeist, so dass ein Coil 20 stets über denselben Bewehrungsstahlstabeinlauf 7 ein und dieselbe Speicherposition 10 eines ersten Bewehrungsstahlstabzwischenspeichers 9 versorgt. Erfindungsgemäß sind auch solche Ausgestaltungen, bei den nur ein Richt-Schneideautomat 19 vorgesehen ist, oder solche, bei denen zwei Richt-Schneideautomaten 19 vorgesehen sind, die entweder eigene oder gemeinsame Speicherpositionen 10 beschickend ausgebildet sind. Im letzteren Fall kann dieselbe Speicherposition 10 mit unterschiedlichen Bewehrungsstahlstabdurchmessern beschickt werden, im ersteren Fall verdoppelt sich die Zahl der Speicherpositionen 10, was die Produktionsgeschwindigkeit erhöht. Erfindungsgemäß ist vorgesehen, dass jeder Stabbildner 19 als Richtschneideapparat mit zwei Motoren versehen ist, so dass gleichzeitig zwei Bewehrungsstahlstäbe 2 pro Stabbildner 19 in den Mattenbildner 6 eingeführt werden können. Der Mattenbildner 6 ist aus einzelnen Segmenten 21 gebildet, wobei die Segmente 21 durch Bauteile miteinander verbunden sind, wie weiter unten ausgeführt wird. Fig. 1 zeigt ebenfalls, dass jedem Segment 21 ein Tragband 4 zugeordnet ist, im dargestellten Fall auf einer Tragbandvorratstrommel 22. Diese sind einzeln und leicht zugänglich angeordnet, so dass ein Wechsel ohne längeren Maschinenstillstand möglich ist. Das dargestellte Ausführungsbeispiel bezieht sich somit ausschließlich auf eine Maschine zur Herstellung einachsiger Bewehrungsstahlstabmatten.

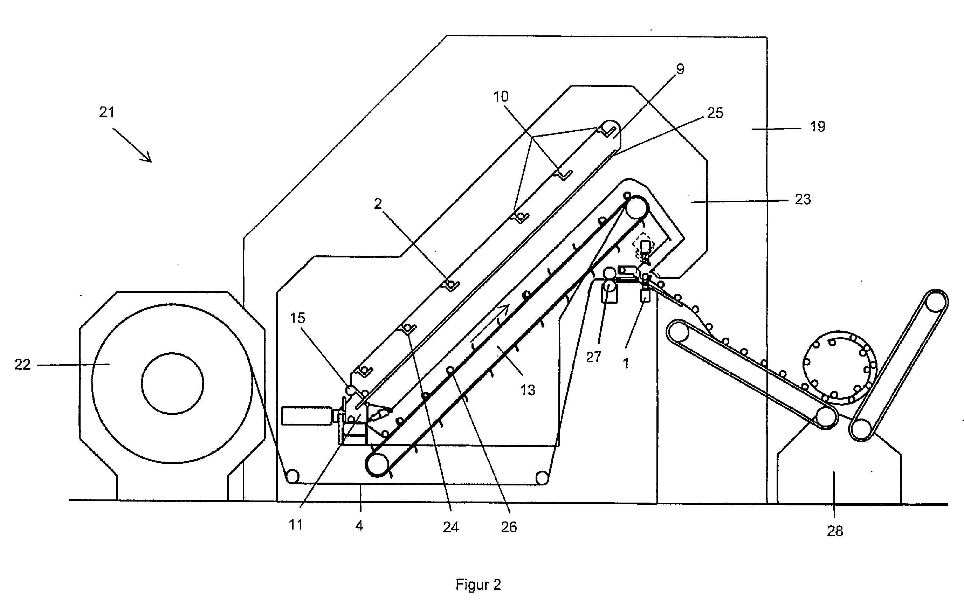

Fig. 2 zeigt einen Schnitt entlang der Linie A-A aus Fig. 1, insbesondere ein Segment 21 im Querschnitt. Dargestellt ist ebenfalls der Umriß eines als Richtschneideautomat ausgebildeten Stabbildners 19. Ein Segment 21 wird erfindungsgemäß durch einen Tragarm 23 gebildet, der die weiteren Baugruppen trägt. Nicht dargestellt ist der Antrieb dieses Segments 21, der bevorzugt durch eine Welle oder dergleichen von einem gemeinsamen Antrieb aller Segmente 21 erfolgt. Nicht dargestellt ist ebenfalls ein Sockel im Bodenbereich des Segments 21, an dem dieses befestigt ist und der alle Segmente 21 miteinander verbindet. In jede der sechs dargestellten Speicherpositionen 10 wird entweder von Hand ein vorkonfektionierter oder mittels Stabbildner 19 ein konfektionierter Bewehrungsstahlstab 2 eingefördert, wobei eine Speicherposition 10 durch die verschwenkbaren Bewehrungsstahlstabhalter 24 aller Segmente 21 gebildet wird, die auf einer gemeinsamen, sie verbindenden Geraden liegen. Die für die Erstellung der einachsigen Bewehrungsstahlmatte notwendigen Bewehrungsstahlstäbe 2 werden also in sechs horizontal und vertikal voneinander beabstandete Speicherpositionen 10 eingeführt und dort zur Verarbeitung bereit gehalten. Der erste Bewehrungsstahlstabzwischenspeicher 9 wird demnach durch diese sechs Speicherpositionen 10 gebildet. Dieser erste Zwischenspeicher 9 wird erfindungsgemäß bei dieser Ausführungsform beidseitig vom Mattenbildner beschickt, wobei jeder der beiden Stabbildner 19 in dieser Ausführungsform so von Coils 20 versorgt wird, dass er Bewehrungsstahlstäbe 2 gleichen Durchmessers nicht in dieselbe Speicherposition 10 fördert. Dies hat den Vorteil, dass in der Bewehrungsstahlmatte aufeinander folgende Bewehrungsstahlstäbe 2 gleichen Durchmessers schneller verarbeitet werden können. Nicht dargestellt sind die erfindungsgemäßen Ausführungsformen, bei denen jeder der beiden Stabbildner 19 seine ihm zugeordneten Speicherpositionen 10 beschickt und die, bei der nur ein Stabbildner 19 vorhanden ist, oder bei dem nur ein Vorhaltemagazin 5 vorhanden sind oder bei denen vorkonfektionierte Bewehrungsstahlstäbe eingefördert werden. In den ersten beiden Fällen gäbe es 12 bzw. 6 Speicherpositionen 10. Ein gespeicherter Bewehrungstahlstab 2 wird durch Verschwenkung des ihn haltenden Bewehrungsstahlstabhalters 24 freigeben, so dass er getrieben durch die Schwerkraft auf ein durch den gesamten Mattenbildner 6 laufendes Aufprallblech 25 auftrifft und an diesem zu einem Anschlag 15 hinunterrutscht. Nach Freigabe durch den verfahrbaren Anschlag 15 fällt der Bewehrungsstab 2 auf eine Querpositionierungsvorrichtung 11, von der er an ein Kettenförderband 26 mit Schleppgliedern weitergereicht wird. Der Kettenförderer 26 führt den querpositionierten Bewehrungsstab 2 einem Schweißautomaten 1 zu, die diesen mit dem Tragband 4 verbindet. Erfindungsgemäß läuft das Tragband 4 im Fußbereich des Tragarms 23 und wird über einen Reibrollenantrieb 27 von der Tragbandvorratstrommel 22 abgezogen und der Schweißanlage 1 zugeführt. Nach Verbindung von Bewehrungsstab 2 und Tragband 4 wird die im Entstehen begriffene einachsige Bewehrungsmatte in einen Ausförderbereich 28 verbracht, wo sie zu einer Rolle aufgerollt wird. Der erste Bewehrungsstahlstabzwischenspeicher 9 wird mit Vorteil durch den Kettenförderer 26 als zweitem Bewehrungsstahlstabzwischenspeicher 13 ergänzt, der die bereits querpositionierten Bewehrungsstahlstäbe 2 vor der Verarbeitung zwischenspeichert und gleichzeitig in den Befestigungsbereich verbringt. Durch den segmentartigen Aufbau ist die Maschine leicht zugänglich.

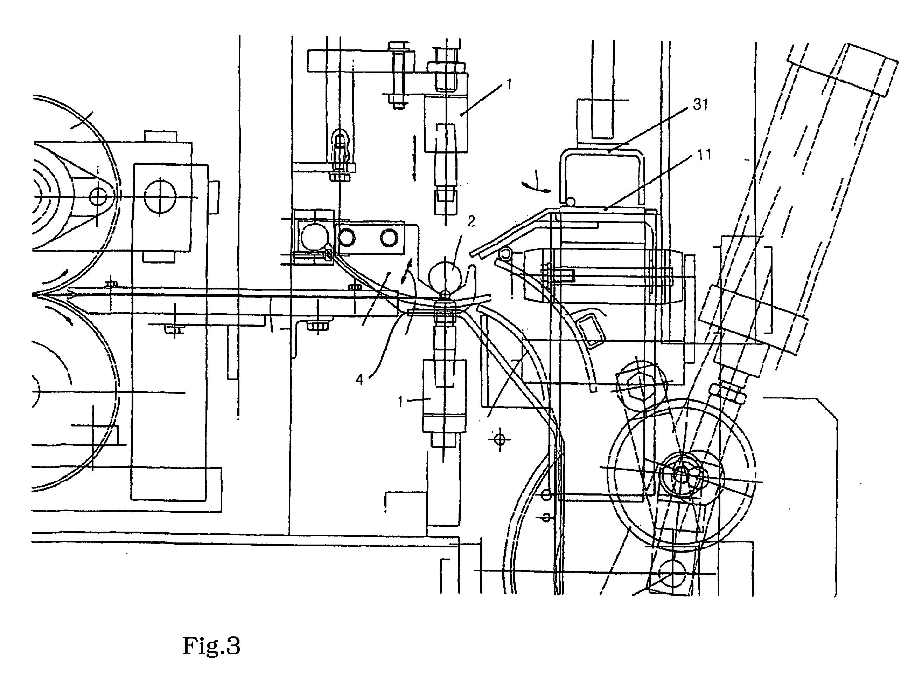

In Fig. 3 ist eine Seitenansicht einer weiteren Ausführungsform der Maschine gezeigt, bei der keine Zwischenspeicherung der Bewehrungsstahlstäbe erfolgt und bei der die Querpositioniervorrichtung 11 durch ein verfahrbares Band gebildet wird, überwölbt von einem u-förmigen Positionsschutz 31, der gleichzeitig als Auswerfer dient. Bei dieser Ausführungsform wird der querpositionierte Bewehrungsstahlstab 2 ebenfalls einer Schweißanlage 1 zugeführt und an seinen Rippen mit einem Tragband verbunden.

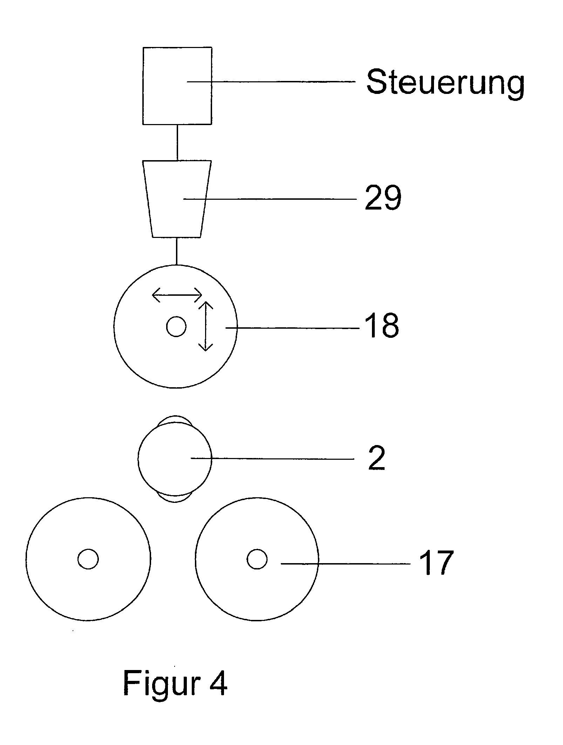

Fig. 4 zeigt schließlich eine Skizze einer Lagekontroll- und - korrektureinheit 8 gemäß der Erfindung. Zwischen zwei Rollen 17 ist ein Bewehrungstahlstab 2 eingefördert. Eine Antriebseinheit 18 ist von oben vertikal und horizontal auf den Bewehrungsstahlstab 2 verfahrbar und tritt mit diesem in ihn drehende Wirkverbindung. Die Antriebseinheit weist dabei einen Hydraulikzylinder 29, dessen Hublänge nachverfolgbar ist. Durch Drehen des Bewehrungsstahlstabes 2 um wenigstens 360° um seine Längsachse ist der Bereich größten Durchmessers ermittelbar, hervorgerufen durch den rippenbedingt "eiförmigen" Querschnitt. Hierzu ist eine Steuerung vorgesehen, die ebenfalls die Antriebseinheit steuert, so dass der Bewehrungsstahlstab 2 in die richtige Lage für die zur Lagekontrolleinheit 8 versetzt angeordneten Schweißelektrode zu liegen kommt. Ein solcher mechanischer Taster ist bei den rauen Umgebungsbedingungen der Mattenfertigung besonders sicher, da er unanfällig für Verschmutzungen ist und gleichzeitig ausreichende Genauigkeit bietet. Selbstverständlich könnten auch andere Sensoren verwendet werden, wie beispielsweise Lichtschranken, Laser, Videoüberwachung oder automatische Bilderkennung. Nicht dargestellt ist die Einheit der Erfindungsgemäßen Maschine, mit der der Bewehrungsstahlstab 2 entlang seiner Längsachse nachpositioniert werden kann.

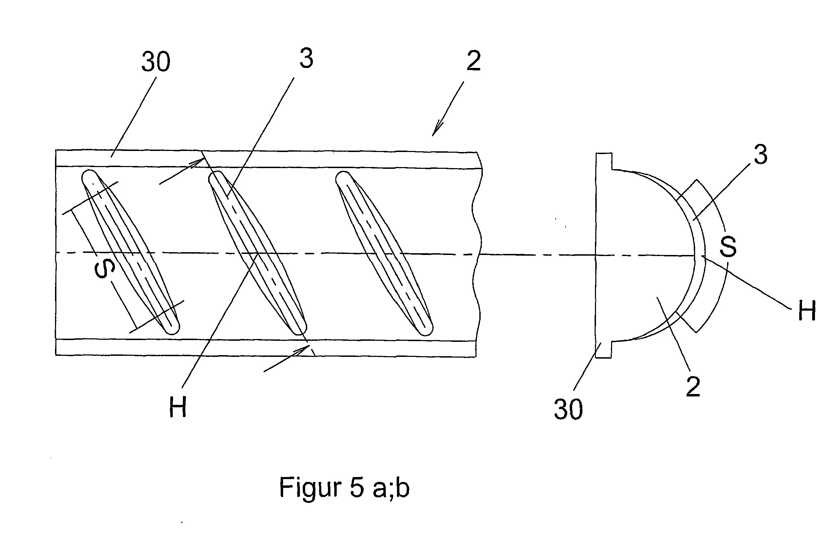

Zur Verdeutlichung ist in Fig. 5a, b eine Skizze eines Bewehrungsstahlstabes in Längsaufsicht und Querschnitt wiedergegeben. Gut zu erkennen sind die beabstandeten und schräg zur Querachse angeordneten sichelförmigen Rippen 3. In Fig. 5b ist je eine Längsrippe 30 zwischen den aufeinander weisenden Enden der Rippen 3 einer Stabseite wiedergegeben. Ein Schweißbereich S der Rippe 3 ist markiert, bei dem in jedem Fall ausreichend Rippenmaterial zur sicheren Durchführung des Verfahrens zur Verfügung steht.

Wichtig ist, dass die Erfindung die Bewehrungsstahlstäbe 2 und die Schweißvorrichtung 1 sicher so zueinander positioniert, dass eine Schweißung im Bereich der Rippen 3 ermöglicht wird, vorzugsweise im Bereich der höchsten Rippenhöhe H.

### BEZUGSZEICHENLISTE

- 1: Schweißvorrichtung
- 2: Bewehrungsstahlstab
- 3: Rippe
- 4: Tragband
- 5: Bewehrungsstahlstabvorhaltemagazin
- 6: Mattenbildner
- 7: Bewehrungsstahlstabeinlauf
- 8: Lagekontrolle und -korrekturvorrichtung
- 9: erster Bewehrungsstahlstabzwischenspeicher
- 10: Speicherposition
- 11: Querpositionierungsvorrichtung
- 12: Bewehrungsstahlstabhalter
- 13: zweiter Bewehrungsstahlstabzwischenspeicher
- 14: Transportweg
- 15: verfahrbarer Anschlag
- 16: verfahrbarer Anschlag
- 17: Rolle
- 18: Antriebseinheit
- 19: Stabbildner
- 20: Coil
- 21: Segment
- 22: Tragbandvorratstrommel
- 23: Tragarm
- 24: Bewehrungsstahlstabhalter
- 25: Aufprallblech
- 26: Kettenförderband
- 27: Reibrollenantrieb
- 28: Ausförderbereich
- 29: Hydraulikzylinder zur Lagebestimmung
- 30: Längsrippe
- 31: Positionsschutz

## Patentansprüche

1. Verfahren zur Herstellung von Schweißverbindungen zwischen Stahlkörpern zur Verwendung bei der Herstellung dauerschwingfester, nicht überwiegend ruhend belasteter Stahlbetonbauteile, **dadurch gekennzeichnet, dass** das Verfahren die Schritte enthält:
a. relatives Positionieren wenigstens einer Schweißvorrichtung (1) und wenigstens zwei gleicher oder unterschiedlicher Elemente der Gruppe gebildet durch: gerippte Bewehrungsstahlstäbe (2), Stahlstäbe oder Stahlelemente mit Bereichen erhöhten Durchmessers im Vergleich zu ihren jeweiligen Kerndurchmessern, oder eines solchen Elements und eines Tragbandes (4) zueinander,
b. Verschweißen der Elemente (2) ausschließlich im Bereich wenigstens einer ihrer Querrippen (3) und
c. Wiederholung der Schritte a) bis b), bis die gewünschte Zahl an Schweißverbindungen erreicht ist,
wobei in oder nach Schritt a) eine gesteuerte Lagekontrolle und ggf. Lagekorrektur des oder der zu verschweißenden Elemente erfolgt, wobei die Lagekontrolle mechanische oder optische Sensoren verwendet und die Lagekorrektur mittels Drehen des Elements um wenigstens 360° um seine Längsachse erfolgt.

2. Verfahren gemäß Anspruch 1, **dadurch gekennzeichnet, dass** Schritt b) im Bereich von mehr als 30% der maximalen Höhe der Rippe (3), vorzugsweise von mehr als 60%, ganz besonders im Bereich von mehr als 80% durchgeführt wird.

3. Verfahren gemäß Anspruch 1 oder 2, **dadurch gekennzeichnet, dass** die Lagekontrolle Messfühler verwendet.

4. Verfahren gemäß Anspruch 1, 2 oder **3,-dadurch gekennzeichnet, dass** ein Schritt d) der Kontrolle der Schweißnähte erfolgt.

5. Verfahren gemäß einem der vorherigen Ansprüche, **dadurch gekennzeichnet, dass** Schritt b) unter Schweißsteuerung erfolgt, insbesondere unter Steuerung des Energieeintrages.

6. Verfahren gemäß einem der vorherigen Ansprüche, **dadurch gekennzeichnet, dass** die Schweißparametersteuerung die Schweißvorrichtung (1) so steuernd ist, dass vorgewählte Schweißpunkte zur Erzeugung ungestörter Bereiche der Bewehrungsstahlstabmatte ausgelassen werden.

7. Maschine zur Herstellung von geschweißten Bewehrungsstahlstabmatten zur Verwendung bei der Herstellung dauerschwingfester, nicht überwiegend ruhend belasteter Stahlbetonbauteile, aufweisend wenigstens eine Schweißvorrichtung (1) und wenigstens eine Stahlstabzufuhr, **dadurch gekennzeichnet, dass** die Schweißvorrichtung (1) zwei oder mehr gleiche oder unterschiedliche Elemente aus der Gruppe: gerippte Bewehrungsstahlstäbe (2) und Stahlstäbe mit Bereichen erhöhten Durchmessers im Vergleich zu ihrem jeweiligen Kerndurchmesser, oder eines solchen Elements und eines Tragbandes (4) miteinander verbindend ausgebildet ist und die Maschine eine gesteuerte Lagekontrolle und -korrekturvorrichtung (10) für die Elemente aufweist, die die ausschließliche Verschweißungslage zum Verschweißen im Bereich wenigstens einer Querrippe (3) sicherstellt, wobei die gesteuerte Lagekontrolle mechanische oder optische Sensoren verwendet und die Lagekorrektur mittels Drehen des Elements um wenigstens 360° um seine Längsachse erfolgend ist.

8. Maschine gemäß Anspruch 7, **dadurch gekennzeichnet, dass** die Lagekontroll- und -korrekturvorrichtung (10) einen mechanischen Messfühler aufweist.

9. Maschine gemäß Anspruch 7 oder 8, **dadurch gekennzeichnet, dass** sie weiterhin aufweist: ein Bewehrungsstahlstabvorhaltemagazin (5), einem zwischen Bewehrungsstahlstabvorhaltemagazin (5) und Mattenbildner (6) angeordneten Bewehrungsstahlstabeinlauf (7).

10. Maschine (1) gemäß Anspruch 7, 8 oder 9, **dadurch gekennzeichnet, dass** die Lagekontroll- und -korrekturvorrichtung (10) Rollen (17) aufweist, die zwischen sich ein Element, insbesondere einen Bewehrungsstahlstab (2), aufnehmen sowie Antriebseinheiten (18), die wirkmäßig auf das Element einwirkend ausgebildet sind und vorzugsweise in ihrer Lage relativ zum Element veränderbar ausgebildet sind.

11. Maschine gemäß einem der Ansprüche 7 bis 10, **dadurch gekennzeichnet, dass** sie eine Schweißparametersteuerung aufweist.

12. Geschweißte Bewehrungsstahlstabmatte zur Verwendung in Stahlbetonbauteilen und -werken mit überwiegend nicht ruhender Belastung, **dadurch gekennzeichnet, dass** sie quer gerippte Bewehrungsstahlstäbe (2) aufweist, die ausschließlich im Bereich wenigstens eines Teils ihrer Querrippen (3) mit anderen Bewehrungsstahlstäben (2) im Bereich wenigstens eines Teils von deren Querrippen (3) oder mit Tragbändern (4) verschweißt sind.

## Claims

1. A method for producing welded joints between steel bodies for use in the production of steel concrete components that have a high fatigue strength and are not predominantly subjected to static loads, **characterized in that** the method comprises the steps of:
a. relative positioning between at least one welding device (1) and at least two identical or different elements of the group composed of: ribbed reinforcing steel rods (2), steel rods or steel elements with regions of increased diameter in comparison with their respective core diameters or such an element and a brace (4),
b. welding the elements (2) exclusively in the region of at least one of their oblique ribs (3), and
c. repeating steps a) to b) until the desired number of welding joints is produced,
wherein controlled position monitoring and, if applicable, a position correction of the element or elements to be welded is carried out in or after step a), wherein mechanical or optical sensors are used for the position monitoring, and wherein the position correction is realized by turning the element about its longitudinal axis by at least 360°.

2. The method according to claim 1, **characterized in that** step b) is carried out in a region of more than 30% of the maximum height of the rib (3), preferably more than 60%, particularly in a region of more than 80%.

3. The method according to claim 1 or 2, **characterized in that** sensing elements are used for the position monitoring.

4. The method according to claim 1, 2 or 3, **characterized in that** a step d) of controlling the welding seams is carried out.

5. The method according to one of the preceding claims, **characterized in that** step b) is carried out under welding control, particularly by controlling the energy input.

6. The method according to one of the preceding claims, **characterized in that** the welding parameter control controls the welding device (1) in such a way that preselected welding spots are skipped in order to produce undisturbed regions of the reinforcing steel rod mat.

7. A machine for producing welded reinforcing steel rod mats for use in the production of steel concrete components that have a high fatigue strength and are not predominantly subjected to static loads, featuring at least one welding device (1) and at least one steel rod feed, **characterized in that** the welding device (1) is designed for interconnecting two or more identical or different elements of the group composed of: ribbed reinforcing steel rods (2) and steel rods with regions of increased diameter in comparison with their respective core diameter or such an element and a brace (4), and **in that** the machine features a controlled position monitoring and correction device (10) for the elements which ensures the exclusive welding position for welding in the region of at least one oblique rib (3), wherein mechanical or optical sensors are used for the controlled position monitoring and the position correction is realized by turning the element about its longitudinal axis by at least 360°.

8. The machine according to claim 7, **characterized in that** the position monitoring and correction device (10) features a mechanical sensing element.

9. The machine according to claim 7 or 8, **characterized in that** it furthermore features:
a reinforcing steel rod magazine (5) and a reinforcing steel rod inlet (7) arranged between the reinforcing steel rod magazine (5) and the mat forming device (6).

10. The machine according to claim 7, 8 or 9, **characterized in that** the position monitoring and correction device (10) features rolls (17) that accommodate an element, particularly a reinforcing steel rod (2), between one another, as well as drive units (18) that are designed for functionally acting upon the element and preferably realized such that their position relative to the element is variable.

11. The machine according to one of claims 7-10, **characterized in that** it features a welding parameter control.

12. A welded reinforcing steel rod mat for use in steel concrete components and structures that are predominantly subjected to non-static loads, **characterized in that** it features obliquely-ribbed reinforcing steel rods (2) that are exclusively in the region of at least some of their oblique ribs (3) welded to other reinforcing steel rods (2) in the region of at least some of their oblique ribs (3) or to braces (4).

## Revendications

1. Procédé de fabrication d'assemblages soudés entre des corps en acier destinés à être utilisés dans la fabrication de pièces en béton armé non majoritairement sous charge statique, résistantes aux efforts répétés, **caractérisé en ce que** le procédé comprend les étapes :
a. de positionnement relatif entre eux d'au moins un dispositif de soudage (1) et d'au moins deux éléments pareils ou différents du groupe formé par : des barres d'acier à béton nervurées (2), des barres d'acier ou des éléments en acier avec des parties d'un diamètre supérieur comparé à leurs diamètres d'âme respectifs, ou d'un tel élément et d'une bande porteuse (4),
b. soudage des éléments (2) exclusivement au niveau d'au moins une de leurs nervures transversales (3) et
c. répétition des étapes a) à b) jusqu'à ce que le nombre d'assemblages soudés souhaité soit atteint,
sachant que dans ou après l'étape a) a lieu un contrôle de position commandé et le cas échéant une correction de position du ou des élément(s) à souder, sachant que le contrôle de position emploie des capteurs mécaniques ou optiques et la correction de position s'effectue par rotation de l'élément d'au moins 360° sur son axe longitudinal.

2. Procédé selon la revendication 1, **caractérisé en ce que** l'étape b) est exécutée dans la plage de plus de 30 % de la hauteur maximale de la nervure (3), de préférence de plus de 60 %, tout particulièrement dans la plage de plus de 80 %.

3. Procédé selon la revendication 1 ou 2, **caractérisé en ce que** le contrôle de position emploie des sondes.

4. Procédé selon la revendication 1, 2 ou 3, **caractérisé en ce qu'**une étape d) de contrôle des cordons de soudure a lieu.

5. Procédé selon l'une des revendications précédentes, **caractérisé en ce que** l'étape b) est exécutée sous soudage commandé, en particulier par un apport d'énergie commandé.

6. Procédé selon l'une des revendications précédentes, **caractérisé en ce que** la commande des paramètres de soudage commande le dispositif de soudage (1) de telle façon que des points de soudage présélectionnés sont sautés pour produire des parties non touchées du tapis de barres d'acier à béton.

7. Machine de fabrication de tapis de barres d'acier à béton soudés destinés à être utilisés dans la fabrication de pièces en béton armé non majoritairement sous charge statique, résistantes aux efforts répétés, présentant au moins un dispositif de soudage (1) et au moins une alimentation de barres d'acier, **caractérisé en ce que** le dispositif de soudage (1) est conçu en assemblant entre eux deux ou plusieurs éléments pareils ou différents du groupe formé par : des barres d'acier à béton nervurées (2) et des barres d'acier avec des parties d'un diamètre supérieur comparé à leurs diamètre d'âme respectif, ou un tel élément et une bande porteuse (4), et la machine présente un dispositif de contrôle et de correction de position (10) commandé pour les éléments, qui garantit la position de soudage exclusive pour le soudage au niveau d'au moins une nervure transversale (3), sachant que le contrôle de position commandé emploie des capteurs mécaniques ou optiques et la correction de position s'effectue par rotation de l'élément d'au moins 360° sur son axe longitudinal.

8. Machine selon la revendication 7, **caractérisée en ce que** le dispositif de contrôle et de correction de position (10) présente une sonde mécanique.

9. Machine selon la revendication 7 ou 8, **caractérisée en ce qu'**elle présente en outre : un magasin de stockage de barres d'acier à béton (5), une entrée de barres d'acier à béton (7) disposée entre le magasin de stockage de barres d'acier à béton (5) et un formateur de tapis (6).

10. Machine (1) selon la revendication 7, 8 ou 9, caractérisée en ce le dispositif de contrôle et de correction de position (10) présente des rouleaux (17) qui reçoivent entre eux un élément, en particulier une barre d'acier à béton (2) ainsi que des unités d'entraînement (18) qui sont conçues pour agir sur l'élément et sont conçues de préférence avec une position modifiable par rapport à l'élément.

11. Machine selon l'une des revendications 7 à 10, **caractérisée en ce qu'**elle présente une commande de paramètres de soudage.

12. Tapis de barres d'acier à béton destiné à être utilisé dans des pièces et ouvrages de béton armé non majoritairement sous charge statique, **caractérisé en ce qu'**elle présente des barres d'acier à béton nervurées (2) qui sont soudées exclusivement au niveau d'au moins une partie de leurs nervures transversales (3) à d'autres barres d'acier à béton (2) au niveau d'au moins une partie de leurs nervures transversales (3) ou à des bandes porteuses (4).
